# EUROPÄISCHE PATENTSCHRIFT

(11) **EP 0 847 144 B1**
(45) Veröffentlichungstag und Bekanntmachung des Hinweises auf die Patenterteilung: **05.01.2005**
(21) Anmeldenummer: 97117161.6
(22) Anmeldetag: 02.10.1997
(51) Int. Cl.: H04B 1/22, H04B 1/16

(54) **Empfänger mit niedrigem Ruhestrom**
Receiver with low stand by current
Récepteur à faible courant de repos

(30) Priorität: 03.12.1996 DE 19650093
(43) Veröffentlichungstag der Anmeldung: 10.06.1998
(73) Patentinhaber: Fraunhofer-Gesellschaft zur Förderung der angewandten Forschung e.V., 80686 München (DE)
(72) Erfinder: Perthold, Rainer, Dipl.-Ing., 91052 Erlangen (DE); Heuberger, Albert, Dipl.-Ing., 91056 Erlangen (DE); Gerhäuser, Heinz, Dr.-Ing., 91344 Waischenfeld (DE)
(74) Vertreter: Schoppe, Fritz, Dipl.-Ing.

(56) Entgegenhaltungen:
- DE-A- 4 111 097
- US-A- 4 220 156

## Beschreibung

Die vorliegende Erfindung bezieht sich auf Empfänger mit niedrigem Ruhestrom und insbesondere auf Empfänger, welche ständig betrieben und sehr wenig Energie verbrauchen sollen.

Der Empfänger für Amplituden-umgetastete Signale gemäß der vorliegenden Erfindung kann bei Fällen eingesetzt werden, bei denen ein Empfänger ständig betrieben werden soll, bei denen jedoch als Energieversorgung nur eine Batterie zur Verfügung steht, während eine Betriebsdauer des Empfängers von mehreren Jahren ohne Batteriewechsel möglich sein muß. Ein Empfänger für Amplituden-umgetastete Signale, der die genannten Anforderungen erfüllt, kann beispielsweise bei funkbasierten Heizkostenzählern zur Auslösung eines Funktelegramms, als Rückkanal bei Fernsteuerungen zur Übertragung von Daten und zur Programmierung und bei sogenannten "Tags" (Tag = Etikette), welche kleine Transponder beispielsweise zur Identifikation von Gegenständen sind, eingesetzt werden.

In der Technik sind Empfänger bekannt. Insbesondere werden zum Empfang von Hochfrequenzsignalen Detektorempfänger eingesetzt, welche aus einer Gleichrichterdiode und nachgeschalteten Verstärkern bestehen. Dieses Empfängerkonzept hat eine schlechte Hochfrequenzempfindlichkeit insbesondere, wenn darauf geachtet werden soll, daß ein der Gleichrichterdiode nachgeschalteter Verstärker nur sehr wenig elektrische Leistung verbrauchen darf, was nur mit einem geringen Ruhestrom möglich ist. Bei einem geringen Ruhestrom ist jedoch die Steilheit beispielsweise eines Transistorverstärkers zu gering, wodurch am Eingang des Verstärkers, d.h. am Ausgang der Gleichrichterdiode, relativ hohe Signalpegel anliegen müssen, damit am Ausgang des Verstärkers ein verstärktes Signal erscheint.

Stromsparende Empfänger sind in der Technik bekannt. Die DE 43 03 210 A1 beschreibt u.a. einen Empfänger, der eine Antenne, einen Detektor und eine Basisbandstufe aufweist. Die einzelnen Komponenten des Empfängers werden durch eine Batterie versorgt, an die eine Stromversorgungssteuerung angeschlossen ist, die den Empfänger mit Ausnahme des Detektors in einen inaktiven Zustand schaltet. Der Empfänger wird mit Hilfe einer Aufweckschaltung, die auch im inaktiven Zustand des Empfängers von der Batterie über die Stronversorgungssteuerung versorgt wird, in einen aktiven Zustand geschaltet. Die Aufweckschaltung erkennt einen Niederfrequenzsignalanteil in dem von der Antenne empfangenen und von dem Detektor verarbeiteten Signal. Solange die Aufweckschaltung einen Niederfrequenzanteil nicht erkennt, verbleibt der Empfänger in einem inaktiven Zustand. Erkennt die Aufweckschaltung hingegen den Niederfrequenzsignalanteil, so wird ein Einschaltsignal zu der Stromversorgungssteuerung geleitet, woraufhin alle Stufen des Empfängers mit ihrer erforderlichen Versorgungsspannung beliefert werden. Details der Aufweckschaltung sind in dieser Anmeldung nicht beschrieben.

Die DE 43 29 122 C1 beschreibt einen Empfänger für ASK-modulierte Mikrowellensignale (ASK = Amplitude Shift Keying = Amplitudenumtastung). Der Empfänger für ASK-modulierte Mikrowellensignale weist einen Hüllkurvendetektor auf, welcher mindestens ein nichtlineares Element in der Ausführung eines gesteuerten Blindwiderstandes aufweist. Durch Verwendung eines gesteuerten Blindwiderstandes im Gegensatz zu einem gesteuerten Wirkwiderstand verringern sich die Konversionsverluste des Empfängers, und sein Signal/Rausch-Verhältnis verbessert sich. Dem gesteuerten Blindelement ist ein konventioneller Basisbandverstärker nachgeschaltet, welcher beispielsweise ein hochohmiger Operationsverstärker sein kann.

Das U.S. Patent Nr. 4,220,156 offenbart einen implantierbaren AM-Empfänger mit einer variablen Schwelle, welcher Signale über einem sich verändernden Rauschpegel erfassen kann. Der AM-Empfänger umfaßt einen AM-Detektor, der Signale von einer Antenne empfängt. Das Ausgangssignal des AM-Detektors wird einem Spitzendetektor und dem positiven Eingang eines Komparators zugeführt. Der Spitzendetektor umfaßt einen Verstärker, welcher über eine Diode einen Kondensator auflädt, wobei parallel zu dem Kondensator ein Entladungswiderstand geschaltet ist. Der Kondensator wird auf die Spitzenamplitude des erfaßten Signals aufgeladen. Die Spannung am Kondensator wird ebenfalls einem weiteren Widerstand zugeführt, welcher seriell zu wieder einem weiteren Widerstand mit einem Referenzpotential verbunden ist. Eine von der Referenzspannung abhängige Spannung wird an den Komparator angelegt, wobei diese Spannung als die Schwellenspannung dient. Wenn das erfaßte Signal kleiner als die Schwelle ist, dann ist das Ausgangssignal des AM-Empfängers niedrig. Wenn die Spitzenamplitude des empfangenen Signals jedoch größer als die variable Schwelle ist, dann ist das Ausgangssignal des Komparators hoch.

Die DE 41 11 097 A1 offenbart eine Empfangsschaltung für ein moduliertes radioelektrisches Signal für eine unabhängige elektronische Vorrichtung. Eine Spulenantenne, die über einen Kondensator auf die Frequenz einer Trägerwelle abgestimmt ist, speist eine Demodulationsstufe, die einen ersten Transistor enthält und einen in Kaskade geschalteten zweiten Transistor sowie weitere Transistoren enthält, um ausgangsseitig ein Demodulationssignal zu liefern. Das Demodulationssignal wird einer Formungsstufe zugeführt, die eine Signalformung liefert. Die Nichtlinearität eines Transistors in der Demodulationsstufe wird verwendet, um die Verzerrung des Trägenivellensignals zu bewirken und somit ein Signal mit der Frequenz des Moduliersignals zu erzeugen. Eine entsprechende selektive Filterung innerhalb der Demodulationsstufe selbst erlaubt die Rückgewinnung dieses Signals bei gleichzeitiger Ausschaltung der Frequenz der Trägerwelle. Die Aufgabe der vorliegenden Erfindung besteht darin, einen Empfänger für Amplituden-umgetastete Signale zu schaffen, welcher mit einem geringen Ruhestrom betrieben werden kann, und welcher dennoch eine ausreichende Empfindlichkeit besitzt. Diese Aufgabe wird durch einen Empfänger nach Anspruch 1 gelöst.

Der Erfindung liegt die Erkenntnis zugrunde, einen Verstärker mit nichtlinearen Eigenschaften mit einem vorgegebenen Frequenzgang zu versehen. Insbesondere bewirkt eine Gegenkopplung mit Tiefpaßcharakteristik, daß der durch die Verstärkerbeschaltung vorgegebene Ruhestrom des nichtlinearen Verstärkers konstant bleibt. Ein Empfänger für Amplituden-umgetastete Signale gemäß der vorliegenden Erfindung umfaßt einen Eingang für das Amplituden-umgetastete Signal, einen nichtlinearen Verstärker und eine Tiefpaßrückkopplungsschaltung zum Gegenkoppeln des nichtlinearen Verstärkers, welche zwischen einem Ausgang des nichtlinearen Verstärkers und dem Eingang geschaltet ist, und welche einen niederfrequenten Anteil des Ausgangssignals zum Eingang rückkoppelt, wodurch beim Empfang eines nicht Amplituden-umgetasteten Signals der Arbeitspunkt des nichtlinearen Verstärkers in Richtung zu kleineren Verstärkungen des nichtlinearen Verstärkers hin verschoben wird.

Die Gegenkopplung mit Tiefcharakteristik macht den Empfänger gegenüber Temperaturschwankungen unempfindlich, insbesondere bezüglich der Eingangsempfindlichkeit und des Ruhestroms. Wie es bereits erwähnt wurde, soll der Empfänger gemäß der vorliegenden Erfindung lediglich mit einer Batterie versorgt werden, wobei derselbe dennoch beispielsweise über mehrere Jahre betriebsfähig sein soll. Durch den geringen vorgebbaren Ruhestrom kann eine ausreichende Hochfrequenzempfindlichkeit sichergestellt werden. Kaskadierte Transistorstufen ohne Ruhestrom und ohne Gegenkopplung sind dagegen relativ unempfindlich. Bei ihnen muß eine Hochfrequenzspannung im Bereich über 50 mV am Eingang anliegen, um am Ausgang einen Impuls auszulösen.

Der erfindungsgemäße Empfänger weist einen ausreichend kleinen Ruhestrom auf, der unter 10 µA liegt, um bei batteriebetriebenen Geräten die Lebensdauer der Batterie nicht signifikant zu verkürzen. Seine Empfindlichkeit liegt jedoch im Bereich von -70 dBm bei einer Eingangsimpedanz von 1 kΩ. Gegenüber einem Empfänger ohne Ruhestrom ist der Empfänger der vorliegenden Erfindung wesentlich empfindlicher. Bei konstanten Hochfrequenzträgern am Eingang wird ferner die Stromaufnahme begrenzt. Dies ist bei Störungen von Vorteil, wenn der Empfänger aufgrund ungünstiger Umstände konstante, d.h. nicht Amplituden-umgetastete, Signale empfängt. In diesem Fall würde ohne eine Gegenkopplung der Empfang von nicht vorgesehenen Signalen eine vorzeitige Entleerung der Batterie, die den Empfänger versorgt, bedeuten.

Optional kann der Empfänger gemäß der vorliegenden Erfindung mit einem Bandpaß versehen werden, welcher die Empfangsfrequenz bestimmt. Eine Anpassung des Empfängers an verschiedene Frequenzbänder ist somit nur durch geringe Änderungen möglich.

Eine Realisierung des erfindungsgemäßen Empfängers ist mit wenigen und sehr preisgünstigen Komponenten möglich, wodurch der Platzbedarf des Empfängers niedrig ist.

Bevorzugte Ausführungsbeispiele der vorliegenden Erfindung werden nachfolgend bezugnehmend auf die beiliegenden Zeichnungen erläutert. Es zeigen:
- Fig. 1: eine prinzipielle Struktur eines Empfängers für Amplituden-umgetastete Signale gemäß einem bevorzugten Ausführungsbeispiel der vorliegenden Erfindung;
- Fig. 2: ein Bodediagramm des Empfängers innerhalb der Gegenkopplungsschleife und der Gegenkopplung; und
- Fig. 3: ein Schaltungsdiagramm des Empfängers für Amplituden-umgetastete Signale gemäß einem bevorzugten Ausführungsbeispiel der vorliegenden Erfindung.

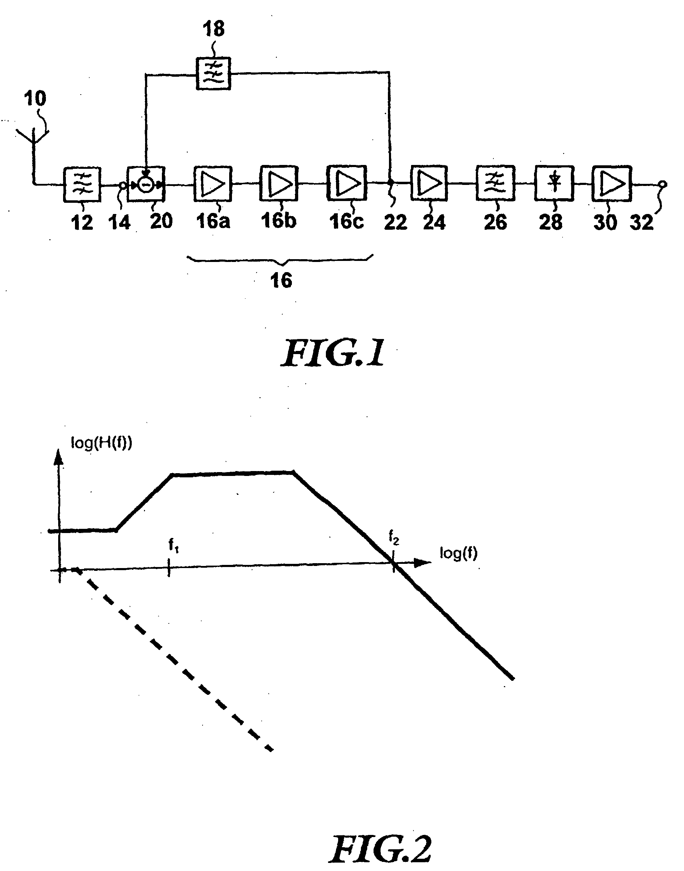

Fig. 1 zeigt eine prinzipielle Struktur des Empfängers für Amplituden-umgetastete Signale gemäß der vorliegenden Erfindung. Ein zu empfangendes Eingangssignal gelangt über eine Antenne 10 und einen Bandpaß 12 an einen Eingang 14 des Empfängers. Das Bandpaßfilter 12 erreicht eine erforderliche Hochfrequenzselektion auf den gewünschten, zu empfangenden Frequenzkanal. Ein nichtlinearer Verstärker 16 wird durch eine Kettenschaltung von nichtlinearen Verstärkungseinheiten 16a, 16b und 16c gebildet. Das durch die in Kette geschalteten Verstärkungseinheiten 16a bis 16c verstärkte Signal wird über ein Tiefpaßfilter 18 an den Eingang 14 des Empfängers rückgekoppelt. Eine Signalsubtraktionseinrichtung 20 subtrahiert das über das Tiefpaßfilter 18 rückgekoppelte Signal von dem an dem Eingang 14 anliegenden Signal, wodurch eine Gegenkopplung des Verstärkers 16, der aus den Verstärkungseinheiten 16a bis 16c besteht, realisiert ist. Ein Ausgangssignal des nichtlinearen Verstärkers 16, d.h. das Ausgangssignal der in der Kette von nichtlinearen Verstärkungseinheiten 16a bis 16c letzten Verstärkungseinheit 16c, wird an einem Ausgang 22 des nichtlinearen Verstärkers 16 einem weiteren nichtlinearen Verstärker 24 zugeführt, dem ein Tiefpaßfilter 26, eine Detektoreinrichtung 28 und noch ein weiterer Verstärker 30 nachgeschaltet sind. Das Ausgangssignal des nichtlinearen Verstärkers 30 steht an einem Ausgang 32 des Empfängers für Amplituden-umgetastete Signale zu einer weiteren Verarbeitung bereit.

Die Verstärkungseinheiten 16a bis 16c müssen eine nichtlineare und unsymmetrische Übertragungs- bzw. Verstärkungskennlinie aufweisen, wobei die Anzahl der Verstärkungseinheiten 16a bis 16c des nichtlinearen Verstärkers 16 für die vorliegende Erfindung unwesentlich ist. Für den Empfänger gemäß der vorliegenden Erfindung kann sowohl eine einzige Verstärkungseinheit als auch eine beliebige Anzahl von in Kette geschalteten Verstärkungseinheitenden den nichtlinearen Verstärker 16 bilden, .

Die nichtlineare Übertragungskennlinie des Verstärkers 16 muß eine im gewünschten Betriebsbereich monoton zunehmende Kleinsignalverstärkung bei zunehmenden Eingangssignalpegeln aufweisen. Dieselbe darf ferner nicht zum Ursprung (d.h. U = 0, I = 0) symmetrisch sein, damit dieselbe eine Gleichrichterwirkung erzielen kann. Nichtlineare Übertragungskennlinien der vorher beschriebenen Art sind beispielsweise bei Bipolartransistoren oder Feldeffekttransistoren zu finden.

Fig. 2 zeigt ein prinzipielles Bodediagramm des nichtlinearen Verstärkers 16 innerhalb der Gegenkopplungsschleife als durchgezogene Linie. Die gestrichelte Linie stellt den Frequenzgang der Tiefpaßrückkopplungsschaltung dar. Für Fachleute ist es offensichtlich, daß ein Frequenzgang bei realen Schaltungen keine wie in Fig. 2 gezeigten eckigen Übergänge aufweist, sondern daß die approximierten Geradenstücke allmählich ineinander übergehen. Die Ordinate in Fig. 2 bezeichnet den Logarithmus der Verstärkung des nichtlinearen Verstärkers 16, d.h. den Logarithmus des Verhältnisses eines Signals an dem Ausgang 22 zu einem Signal an dem Eingang 14 des nichtlinearen Verstärkers 16 von Fig. 1. Der an der Abszisse eingezeichnete Frequenzwert f₁ liegt in der Größenordnung des Kehrwerts der Pulsdauer des empfangenen Amplituden-umgetasteten Signals, d.h. in der Größenordnung der Umtastfrequenz. Die Frequenz f₂ in Fig. 2 entspricht hingegen der Trägerfrequenz des Amplituden-umgetasteten Signals am Eingang 14 des nichtlinearen Verstärkers 16 von Fig. 1. Die Grenzfrequenz der Tiefpaßrückkopplungsschaltung 18, 20 von Fig. 1 liegt bei einem bevorzugten Ausführungsbeispiel der vorliegenden Erfindung unterhalb der Umtastfrequenz f₁ des zu empfangenden Amplituden-umgetasteten Signals, wie es aus Fig. 2 ersichtlich ist.

Die Gegenkopplung durch die Tiefpaßrückkopplungsschaltung regelt den Ruhestrom, d.h. den von dem nichtlinearen Verstärker 16 benötigten Strom bei keinem empfangenen Eingangssignal, auf einen vorgegebenen Wert. Werden mehrere in Kette geschaltete Verstärkungseinheiten verwendet, so ist die Stromaufnahme der der letzten Verstärkereinheit 16c vorhergehenden Verstärkereinheiten 16a und 16b niedriger, weshalb sie nicht signifikant zur Gesamtstromaufnahme beitragen. Alle Verstärkungseinheiten bzw. der nichtlineare Verstärker 16 werden bzw. wird mit einer Vorspannung betrieben, wodurch die Empfängerempfindlichkeit im Vergleich zu einem Verstärker ohne Ruhestrom wesentlich erhöht ist.

Die Funktionsweise des Empfängers gemäß einem bevorzugten Ausführungsbeispiel der vorliegenden Erfindung, welcher in Fig. 1 in Blockschaltbilddarstellung gezeigt ist, wird nachfolgend erläutert. Liegt an dem Eingang 14 ein Signal an, so wird es in der ersten Verstärkungseinheit 16a nichtlinear verstärkt. Der durch die nichtlineare Verstärkung entstehende Gleichspannungsanteil verschiebt die Verstärkungskennlinie des nichtlinearen Verstärkers 16a zu höheren Kleinsignalsteilheiten, d.h. zu höheren Verstärkungen hin, da der gleichgerichtete Anteil des an dem Eingang 14 empfangenen Signals zu einer Arbeitspunktverschiebung der nichtlinearen Verstärkungseinheit 16a führt. Auf gleiche Weise werden die Ruheströme der nichtlinearen Verstärkungseinheit 16b und der nichtlinearen Verstärkungseinheit 16c durch die an ihren Eingängen anliegenden Signale erhöht, wodurch auch ihre Kleinsignalsteilheiten zunehmen. Das an dem Ausgang 22 anliegende Signal ist also gegenüber dem an dem Eingang 14 anliegenden Signal verstärkt. Somit entsteht an dem Ausgang 22 ein Impuls. Liegt die hochfrequente Eingangsspannung an dem Eingang 14 für eine Zeitdauer an, die in der Größenordnung mehrerer Zeitkonstanten, d.h. Kehrwerte der Tiefpaßgrenzfrequenz, der Gegenkopplungsschleife liegt, so reduziert sich die Vorspannung der Verstärkungseinheit 16a so lange, bis die gewünschte Ruhestromaufnahme wieder erreicht ist. Die Tiefpaßrückkopplungsschaltung 18, 20 stellt somit sicher, daß ein konstantes, im Verstärkungsbereich des Empfängers, d.h. in dem Frequenzbereich zwischen der Frequenz f₁ bis f₂, liegendes Trägersignal durch die Gegenkopplung nicht verstärkt wird. Bei einem konstanten, an dem Eingang 14 anliegenden Trägersignal, das nicht Amplituden-umgetastet ist, ist somit das an dem Ausgang 22 des nichtlinearen Verstärkers 16 anliegende Signal im wesentlichen in der Größenordnung des Eingangssignals, wodurch die Stromaufnahme der nichtlinearen Verstärkungseinheit 16c in die Nähe der Ruhestromaufnahme gebracht wird. Die Frequenzselektivität der Gegenkopplung, die durch das Tiefpaßfilter 18 realisiert ist, ermöglicht es demnach, daß konstante hochfrequente Trägersignale nicht verstärkt werden, wohingegen Signale im Frequenzbereich der Umtastfrequenz f₁ verstärkt werden, da die Gegenkopplungsschleife durch das Tiefpaßfilter 18 im wesentlichen unterbrochen und damit unwirksam ist.

Die in Fig. 2 gezeigte reduzierte Verstärkung des Verstärkers 16 bei niedrigen Frequenzen verringert in diesem Frequenzbereich die Schleifenverstärkung so weit, daß keine Instabilitäten auftreten, und daß die Eckfrequenz der Gegenkopplung nicht unhandlich niedrig eingestellt werden muß, es werden also keine großen Kondensatoren benötigt. Ferner muß die Schleifenverstärkung nicht mit resistiven Teilern verringert werden, wobei die Verwendung von resistiven Teilern zu einem erhöhten Stromverbrauch führen würde, was jedoch nicht wünschenswert ist.

An dem Ausgang 22 des nichtlinearen Verstärkers 16 ist die Amplitude des Spannungsimpulses so groß, daß derselbe auch von einem vorspannungslosen Verstärker weiter verstärkt werden kann. Optional kann am Ausgang ein Detektor, wie z.B. der Detektor 28, eingesetzt werden, dessen Ausgangssignal dem weiteren nichtlinearen Verstärker 30 oder optional auch einem Schmitt-Trigger eingespeist wird.

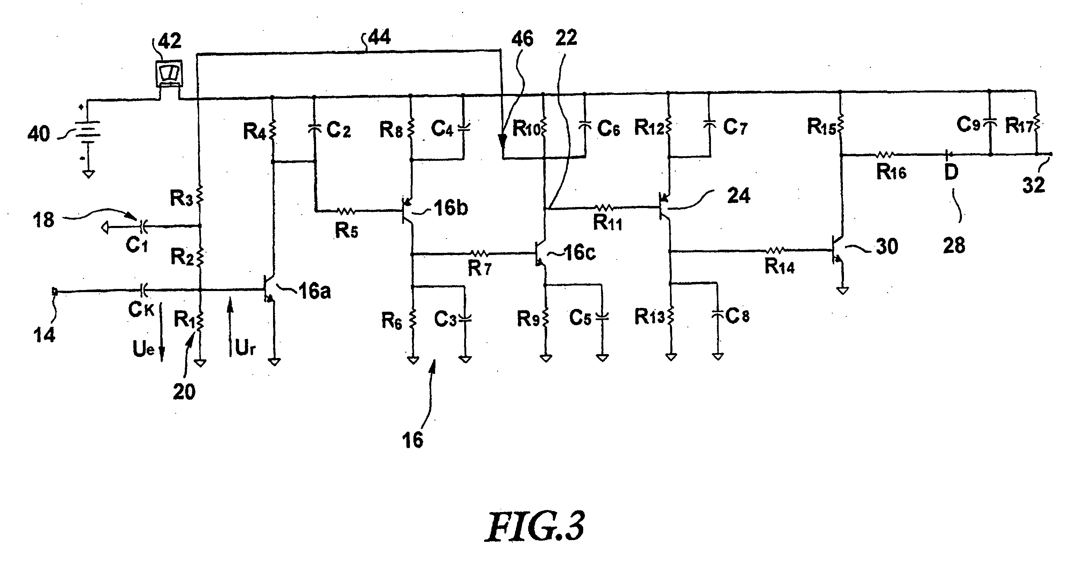

Fig. 3 zeigt ein detailliertes Schaltbild eines Empfängers für Amplituden-umgetastete Signale gemäß der vorliegenden Erfindung. Entsprechend der für Fachleute bekannten Notation sollen nicht ausgefüllte, nach unten gerichtete Dreiecke in Fig. 3 Masseanschlüsse bezeichnen. An dieser Stelle sei angemerkt, daß Fig. 3 das in Fig. 1 gezeigte Bandpaßfilter 12 nicht enthält, da es beispielsweise gemeinsam mit der Antenne 10 realisiert werden kann. Ein Amplituden-umgetastetes Signal, das von der Antenne 10 empfangen und durch das Bandpaßfilter 12 gelaufen ist, gelangt an den Eingang 14 des Empfängers. Der Eingang 14 ist mittels eines Koppelkondensators C_{K} mit einem Basisanschluß eines ersten npn-Bipolartransistors verbunden, den die erste Verstärkungseinheit 16a aufweist. Der Bipolartransistor 16a der ersten Verstärkungseinheit ist in Emitterschaltung geschaltet, wobei sein Emitter direkt auf Masse gelegt ist.

Die Basis des Bipolartransistors der ersten Verstärkungseinheit 16a ist ferner über einen Widerstand R₁ mit der Masse verbunden. Andererseits ist diese Basis ebenfalls über einen Widerstand R₂ und einen Kondensator C₁ mit der Masse verbunden. Der Widerstand R₂ bildet mit einem Widerstand R₃ und dem Kondensator C₁ das Tiefpaßfilter 18 der Tiefpaßrückkopplungsschaltung.

Die Signalsubtraktionseinrichtung 20 ist durch den Widerstand R₁ implementiert, wie es nachfolgend noch detaillierter erläutert wird. Der Kollektor des Bipolartransistors der ersten Verstärkungseinheit 16a ist über einen Widerstand R₄ und einen Kondensator C₂ mit einer Batterie 40 verbunden. Die Batterie liefert einen Strom, der der Ruhestrom des nichtlinearen Verstärkers 16 ist und durch ein Strommeßgerät 42 überwacht werden kann.

Der Kollektor des Bipolartransistors der ersten Verstärkungseinrichtung 16a ist über einen Widerstand R₅ mit der Basis eines pnp-Bipolartransistors verbunden, welcher in Kollektorschaltung verwendet wird. Der pnp-Bipolartransistor stellt einen Teil der Verstärkungseinheit 16b dar. Der Kollektor des Bipolartransistors der zweiten Verstärkungseinheit 16b ist über einen Widerstand R₆ und einen Kondensator C₃ mit der Masse verbunden. Ferner ist dieser Kollektor über einen Widerstand R₇ mit einer Basis eines dritten Bipolartransistors, der ein Teil der dritten Verstärkungseinheit 16c ist, leitfähig verbunden. Der Emitter des Bipolartransistors der zweiten Verstärkungseinheit 16b ist über einen Widerstand R₈ und einen Kondensator C₄ über das Strommeßgerät 42 mit der Batterie verbunden.

Der npn-Bipolartransistor der dritten Verstärkungseinheit 16c wird in Emitterschaltung unter Verwendung einer Stromgegenkopplung eingesetzt. Er weist einen Emitterwiderstand R₉ sowie einen zu demselben parallel geschalteten Kondensator C₅ und einen Kollektorwiderstand R₁₀ sowie einen zu demselben parallel geschalteten Kondensator C₆ auf. Der Kollektor des Bipolartransistors der dritten Verstärkungseinheit 16c ist ferner über einen Rückkopplungszweig 44 mit dem Tiefpaßfilter 18, das aus den Widerständen R₂ und R₃ sowie aus dem Kondensator C₁ gebildet ist, mit der Basis des Bipolartransistors der ersten Verstärkungseinheit 16a verbunden, wodurch die Tiefpaßrückkopplungsschaltung implementiert ist.

Der Kollektor des Bipolartransistors der dritten Verstärkungseinheit 16c bildet ferner den Ausgang 22 des nichtlinearen Verstärkers 16. Der Ausgang 22 ist über einen Widerstand R₁₁ mit der Basis eines weiteren pnp-Bipolartransistors, der ein Teil des weiteren Verstärkers 24 ist, verbunden. Der weitere Verstärker 24 ist kollektorseitig über einen Widerstand R₁₂ und einen Kondensator C₆ mit der Batterie 40 verbunden. Emitterseitig ist der Bipolartransistor der weiteren Verstärkereinrichtung 24 über einen Widerstand R₁₃ und einen Kondensator C₈ mit der Masse verbunden. Ein an dem Kollektor des weiteren Verstärkers 24 anliegendes Ausgangssignal wird über einen Widerstand R₁₄ wiederum einem Bipolartransistor in Emitterschaltung zugeführt, der dem Verstärker 30 von Fig. 1 entspricht. Der Verstärker 30 ist über einen Widerstand R₁₅ mit der Batterie 40 verbunden. Der Kollektor dieses Bipolartransistors ist über einen Widerstand R₁₆ mit der Kathode einer Diode D verbunden, während die Anode der Diode D über einen Kondensator C₉ ebenfalls mit der Batterie 40 in Verbindung steht. An dem anodenseitigen Ende der Diode, die den Detektor 28 bildet, befindet sich der Ausgang 32 der Empfängerschaltung für Amplituden-umgetastete Signale.

Im nachfolgenden wird die Funktionsweise der in Fig. 3 gezeigten Empfängerschaltung gemäß einem bevorzugten Ausführungsbeispiel der vorliegenden Erfindung erläutert. Die Batterie 40 liefert eine Gleichspannung, die über die Widerstände R₄, R₈, R₁₀, R₁₂ und R₁₅ einen Kollektorruhestrom für die Verstärkungseinheiten 16a, 16b, 16c, 24 bzw. 30 liefert. Der Ruhestrom insgesamt, der durch das Strommeßgerät 42 fließt, sowie die Kollektorruheströme für die einzelnen Verstärkungseinheiten oder Transistoren können durch eine geeignete Dimensionierung der genannten Widerstände eingestellt werden. Auf für Fachleute bekannte Art und Weise kann ferner die Grenzfrequenz des Tiefpasses 18 durch die geeignete Wahl der Widerstände R₂, R₃ und des Kondensators C₁ eingestellt werden.

Ein an dem Eingang 14 anliegendes Amplituden-umgetastetes Signal läuft über den Koppelkondensator C_{K}, der zum Abblocken einer Gleichspannung von dem Empfänger vorhanden ist, und zusammen mit dem Widerstand R₁ einen Tiefpaß bildet, zu der ersten Verstärkungseinheit 16a. Die an der ersten Verstärkungseinheit 16a anliegende Spannung wird durch denselben verstärkt und zu dem Eingang der zweiten Verstärkungseinheit 16b mit umgekehrten Vorzeichen gekoppelt. Da der Bipolartransistor der zweiten Verstärkungseinheit 16b in Kollektorschaltung geschaltet ist, invertiert er das Vorzeichen einer zu verstärkenden Spannung nicht, während der Bipolartransistor der dritten Verstärkungseinheit 16c das Vorzeichen der an seinem Eingang anliegenden Spannung wiederum invertiert, wodurch diese Spannung, die an dem Ausgang 22 des nichtlinearen Verstärkers 16 anliegt, die gleiche Richtung wie die Eingangsspannung aufweist. Durch den Rückkopplungszweig 44, der den Ausgang mit dem Eingang des Tiefpasses 18 verbindet, fließt somit ein zu dem Ausgang 22 hin gerichteter Strom, wie es durch einen Pfeil 46 dargestellt ist, der den Widerstand R₁, der die signalsubtraktionseinrichtung 20 bildet, von der Masse zu dem Eingang der ersten Verstärkungseinheit 16a hin durchfließt. Von der von dem Eingang 14 zur Masse gerichteten Spannung des eingangsseitig empfangenen Amplituden-umgetasteten Signals wird daher die durch den in dem Rückkopplungszweig 44 fließenden Strom an dem Widerstand R₁ abfallende Spannung subtrahiert. Diese Situation ist durch einen Spannungspfeil uₑ, der die Eingangsspannung bezeichnen soll, sowie durch einen entgegengesetzt gerichteten Spannungspfeil uᵣ, der die Rückkopplungsspannung symbolisieren soll, dargestellt. Für Fachleute ist es offensichtlich, daß die Festlegung der Richtung von Strom- und Spannungspfeilen willkürlich ist, da der Empfänger der vorliegenden Erfindung Wechselspannungen verarbeitet, und da lediglich die Bias-Ströme bzw. -Spannungen Gleichsignale sind.

Das in Fig. 2 dargestellte Frequenzgangverhalten des nichtlinearen Verstärkers 16 ist durch die Überbrückung der verschiedenen zur Stromgegenkopplung verwendeten Widerstände R₄, R₈, R₆, R₁₀, R₉ mit den jeweiligen Kondensatoren C₂, C₄, C₃, C₆ bzw. C₅ realisiert. Durch geeignete Dimensionierung der genannten Widerstände und Kondensatoren können die Eckfrequenzen der RC-Glieder gewählt werden, um für höhere Frequenzen eine ausreichende Verstärkung zu erreichen, wohingegen die Gleichspannungsverstärkung klein gehalten wird. Die Kollektorwiderstände sind ferner mit einem Kondensator überbrückt, um das Tiefpaßverhalten der Verstärker zu bewirken. Wenn für den Emitterwiderstand R₁₁ des Verstärkers 24 ein ausreichend großer Wert gewählt wird, besitzt dieser Verstärker 24 keinen signifikanten Ruhestrom mehr, weshalb er außerhalb der Gegenkopplungsschleife betrieben werden kann. In Fig. 3 ist lediglich ein einfacher Diodendetektor D gezeigt, wobei es für Fachleute jedoch offensichtlich ist, daß auch ein Komparator oder ähnliches zur Detektion des Amplituden-umgetasteten Eingangssignals verwendet werden kann.

Im nachfolgenden findet sich eine Auflistung der in Fig. 3 verwendeten Elementewerte.

### Spannung der Batterie 40: +3,0 V

| Kondensatoren: | |
|---|---|
| C_{K} = 1.000 pF | C₅ = 220 nF |
| C₁ = 220 nF | C₆ = 47 pF |
| C₂ = 47 pF | C₇ = 100 nF |
| C₃ = 100 pF | C₈ = 1.000 pF |
| C₄ = 220 nF | C₉ = 1.000 pF |

| Widerstände: | |
|---|---|
| R₁ = 10.000 kΩ | R₁₀ = 1.000 kΩ |
| R₂ = 1.000 kΩ | R₁₁ = 470 kΩ |
| R₃ = 1.000 kΩ | R₁₂ = 1.000 kΩ |
| R₄ = 220 kΩ | R₁₃ = 470 kΩ |
| R₅ = 470 kΩ | R₁₄ = 100 kΩ |
| R₆ = 220 kΩ | R₁₅ = 100 kΩ |
| R₇ = 470 kΩ | R₁₆ = 100 kΩ |
| R₈ = 100 kΩ | R₁₇ = 470 kΩ |
| R₉ = 100 kΩ | |

## Patentansprüche

1. Empfänger für Amplituden-umgetastete Signale, mit
einem Eingang (14) für das Amplituden-umgetastete Signal; und
einem nichtlinearen Verstärker (16);
**gekennzeichnet durch**
eine Tiefpaßrückkopplungsschaltung (44, 18, 20) zum Gegenkoppeln des nichtlinearen Verstärkers, die schen einen Ausgang (22) des nichtlinearen Verstärkers (16) und den Eingang (14) geschaltet ist und einen niederfrequenten Anteil eines Signals von dem Ausgang (22) zu dem Eingang (14) rückkoppelt, wodurch bei Empfang eines nicht Amplituden-umgetasteten Signals ein Arbeitspunkt des nichtlinearen Verstärkers (16) in Richtung zu kleineren Verstärkungen des nichtlinearen Verstärkers (16) verschoben wird.

2. Empfänger nach Anspruch 1,
bei dem der nichtlineare Verstärker (16) eine zum Ursprung unsymmetrische Kennlinie aufweist, wobei beim Empfang eines nicht Amplituden-umgetasteten Signals der Arbeitspunkt des nichtlinearen Verstärkers (16) in Richtung zum Ursprung verschoben wird.

3. Empfänger nach Anspruch 1 oder 2,
bei dem der nichtlineare Verstärker (16) eine Mehrzahl von nichtlinearen Verstärkungseinheiten (16a, 16b, 16c) aufweist, die in Kette geschaltet sind.

4. Empfänger nach einem der Ansprüche 1 bis 3,
bei dem der nichtlineare Verstärker (16) einen Verstärkungsfrequenzgang aufweist, der frequenzmäßig zu einer Umtastfrequenz (f₁) des Amplituden-umgetasteten Signals hin ansteigt und zu einer Trägerfrequenz (f₂) des Amplituden-umgetasteten Signals hin wieder abnimmt, damit Signale mit Frequenzen oberhalb der Trägerfrequenz (f₂) des Amplituden-umgetasteten Signals durch den nichtlinearen Verstärker (16) gedämpft werden.

5. Empfänger nach einem der Ansprüche 1 bis 4,
bei dem die Tiefpaßrückkopplungsschaltung (44, 18, 20) eine Tiefpaßgrenzfrequenz aufweist, die kleiner als eine Umtastfrequenz (f₁) des Amplituden-umgetasteten Signals ist.

6. Empfänger nach einem der Ansprüche 1 bis 5,
bei dem der nichtlineare Verstärker (16) in einem Ruhearbeitspunkt betrieben wird, in dem er eine vordefinierte elektrische Leistung, die größer als Null ist, verbraucht.

7. Empfänger nach einem der Ansprüche 1 bis 6,
der an dem Ausgang (22) einen weiteren nichtlinearen Verstärker (30) aufweist, der im Ruhezustand im wesentlichen keine elektrische Leistung verbraucht.

8. Empfänger nach einem der Ansprüche 1 bis 7,
bei dem der nichtlineare Verstärker (16) mindestens einen Bipolartransistor aufweist.

9. Empfänger nach Anspruch 8,
bei dem ein Frequenzgang des nichtlinearen Verstärkers (16) durch eine Emitter- und eine Kollektor-Beschaltung des mindestens einen Bipolartransistors realisiert ist.

10. Empfänger nach Anspruch 8 oder 9,
bei dem der nichtlineare Verstärker eine Kettenschaltung von drei Bipolartransistoren (16a, 16b, 16c) aufweist, wobei die drei Bipolartransistoren derart geschaltet sind, daß ihre multiplizierten Spannungsverstärkungen einen positiven Wert ergeben, damit sich eine durch die Tiefpaßrückkopplungseinrichtung (44, 18, 20) an den Eingang (14) gegengekoppelte Spannung (uᵣ) subtraktiv mit dem an dem Eingang anliegenden Amplituden-umgetasteten Signal (uₑ) überlagert.

## Claims

1. A receiver for amplitude-shift keyed signals, comprising:
an input (14) for the amplitude-shift keyed signal; and
a non-linear amplifier (16);
**characterized by**
a low-pass feedback circuit (44, 18, 20) for counter-coupling the non-linear amplifier, which is connected between an output (22) of the non-linear amplifier (16) and the input (14) and feeds back a low-frequency portion of a signal from the output (22) to the input (14), whereby an operating point of the non-linear amplifier (16) is shifted in the direction to smaller amplifications of the non-linear amplifier (16) when receiving a signal which is not amplitude-shift keyed.

2. The receiver according to claim 1,
wherein the non-linear amplifier (16) comprises a characteristic curve asymmetrical to the origin, wherein the operating point of the non-linear amplifier (16) is shifted towards the origin when receiving a signal which is not amplitude-shift keyed.

3. The receiver according to claims 1 or 2,
wherein the non-linear amplifier (16) comprises a plurality of non-linear amplifying units (16a, 16b, 16c) connected in a chain.

4. The receiver according to one of claims 1 to 3,
wherein the non-linear amplifier (16) comprises an amplification frequency response which increases in frequency to a shift-keyed frequency (f₁) of the amplitude-shift keyed signal and decreases again to a carrier frequency (f₂) of the amplitude-shift keyed signal in order for signals having frequencies above the carrier frequency (f₂) of the amplitude-shift keyed signal to be attenuated by the non-linear amplifier (16).

5. The receiver according to one of claims 1 to 4,
wherein the low-pass feedback circuit (44, 18, 20) comprises a low-pass cut-off frequency which is smaller than a shift-keyed frequency (f₁) of the amplitude-shift keyed signal.

6. The receiver according to one of claims 1 to 5,
wherein the non-linear amplifier (16) is operated in a quiescent operating point where it consumes a predefined electrical power which is greater than zero.

7. The receiver according to one of claims 1 to 6,
comprising at the output (22) another non-linear amplifier (30) which in the quiescent state basically does not consume any electrical power.

8. The receiver according to one of claims 1 to 7,
wherein the non-linear amplifier (16) comprises at least one bipolar transistor.

9. The receiver according to claim 8,
wherein a frequency response of the non-linear amplifier (16) is realized by a circuit at the emitter and a circuit at the collector of the at least one bipolar transistor.

10. The receiver according to claims 8 or 9,
wherein the non-linear amplifier comprises a chain connection of three bipolar transistors (16a, 16b, 16c), wherein the three bipolar transistors are connected such that their multiplied voltage amplifications result in a positive value in order for a voltage (uᵣ) counter-coupled by the low-pass feedback means (44, 18, 20) at the input (14) to be subtractively superimposed by the amplitude-shift keyed signal (uₑ) at the input.

## Revendications

1. Récepteur de signaux manipulés en amplitude, avec
une entrée (14) de signal manipulé en amplitude ; et
un amplificateur non linéaire (16) ;
**caractérisé par**
un circuit de couplage rétroactif à passe-bas (44, 18, 20), destiné à la contre-réaction de l'amplificateur non linéaire, qui est connecté entre une sortie (22) de l'amplificateur non linéaire (16) et l'entrée (14) et qui couple de manière rétroactive une partie basse fréquence d'un signal de la sortie (22) vers l'entrée (14), d'où, à la réception d'un signal non manipulé en amplitude, un point de fonctionnement de l'amplificateur non linéaire (16) est déplacé vers des amplifications inférieures de l'amplificateur non linéaire (16).

2. Récepteur selon la revendications 1,
dans lequel l'amplificateur non linéaire (16) présente une courbe caractéristique asymétrique par rapport à l'origine, le point de fonctionnement de l'amplificateur non linéaire (16) étant, à la réception d'un signal non manipulé en amplitude, déplacé en direction de l'origine.

3. Récepteur selon la revendication 1 ou 2,
dans lequel l'amplificateur non linéaire (16) présente une pluralité d'unités d'amplification non linéaires (16a, 16b, 16c) qui sont connectées en chaîne.

4. Récepteur selon l'une des revendications 1 à 3,
dans lequel l'amplificateur non linéaire (16) présente une réponse fréquentielle d'amplification qui augmente en fréquence vers une fréquence de manipulation (f₁) du signal manipulé en amplitude et diminue à nouveau vers une fréquence de porteuse (f₂) du signal manipulé en amplitude, pour que les signaux à fréquences au-dessus de la fréquence de porteuse (f₂) du signal manipulé en amplitude soient atténués par l'amplificateur non linéaire (16).

5. Récepteur selon l'une des revendications 1 à 4,
dans lequel le circuit de couplage rétroactif à passe-bas (44, 18, 20) présente une fréquence de coupure effective passe-bas qui est inférieure à une fréquence de manipulation (f₁) du signal manipulé en amplitude.

6. Récepteur selon l'une des revendications 1 à 5,
dans lequel l'amplificateur non linéaire (16) fonctionne à un point de fonctionnement de repos où il consomme une puissance électrique prédéterminée qui est supérieure à zéro.

7. Récepteur selon l'une des revendications 1 à 6,
présentant, à la sortie (22), un autre amplificateur non linéaire (30) qui, à l'état de repos, ne consomme substantiellement pas de puissance électrique.

8. Récepteur selon l'une des revendications 1 à 7,
dans lequel l'amplificateur non linéaire (16) présente au moins un transistor bipolaire.

9. Récepteur selon la revendication 8,
dans lequel une réponse fréquentielle de l'amplificateur non linéaire (16) est réalisée par une disposition d'émetteur et une disposition de collecteur de l'au moins un transistor bipolaire.

10. Récepteur selon la revendication 8 ou 9,
dans lequel l'amplificateur non linéaire présente une connexion en chaîne de trois transistors bipolaires (16a, 16b, 16c), les trois transistors bipolaires étant connectés de sorte que leurs amplifications de tension multipliées donnent une valeur positive, pour qu'une tension (uᵣ) couplée de manière rétroactive à l'entrée (14) par le dispositif de couplage rétroactif à passe-bas (44, 18, 20) se superpose de manière soustractive au signal manipulé en amplitude (uₑ) présent à l'entrée.
